# EUROPÄISCHE PATENTSCHRIFT

(11) **EP 0 983 168 B1**
(45) Veröffentlichungstag und Bekanntmachung des Hinweises auf die Patenterteilung: **18.12.2002**
(21) Anmeldenummer: 98922594.1
(22) Anmeldetag: 13.03.1998
(51) Int. Cl.: B60R 21/00

(54) **RÜCKHALTESYSTEM MIT PRECRASH- UND SITZPOSITIONSSENSOREN**
RETRAINT SYSTEM FITTED WITH PRE-CRASH AND SEATING-POSITION SENSORS
SYSTEME DE RETENUE A CAPTEURS AVANT-COLLISION ET CAPTEURS DE POSITION ASSISE

(30) Priorität: 23.05.1997 DE 19721636; 10.09.1997 DE 19739655
(43) Veröffentlichungstag der Anmeldung: 08.03.2000
(73) Patentinhaber: ROBERT BOSCH GMBH, 70442 Stuttgart (DE)
(72) Erfinder: STOCKER, Stefan, Yokohama (JP); MATTES, Bernhard, D-74343 Sachsenheim (DE); MEHLER, Gerhard, D-74534 Besigheim (DE); GRÖSCH, Lothar, D-70374 Stuttgart (DE)
(86) Internationale Anmeldenummer: DE9800742
(87) Internationale Veröffentlichungsnummer: WO98052794

(56) Entgegenhaltungen:
- DE-A- 4 005 598
- DE-A- 4 112 579
- DE-A- 19 610 833
- US-A- 5 439 249

## Beschreibung

### Stand der Technik

Die vorliegende Erfindung betrifft ein Rückhaltesystem, das ein oder mehrere Rückhalteeinrichtungen für Fahrzeuginsassen aufweist und mit mindestens einem Sitzpositionssensor ausgestattet ist, mit dem eine Veränderung der Sitzposition mindestens eines Fahrzeuginsassen feststellbar ist, wobei eine Steuereinrichtung ein erstes Kriterium für das Auslösen eines oder mehrerer Rückhalteeinrichtungen bildet, wenn die Veränderungsgeschwindigkeit der Sitzposition eine vorgebbare Schwelle übersteigt.

Ein derartiges Rückhaltesystem ist aus der DE-A-40 05 598 bekannt. Bei diesem bekannten Rückhaltesystem wird neben einem ersten Auslösekriterium, das von einer bestimmten Sitzpositionsänderung eines Fahrzeuginsassen abgeleitet wird, ein zweites Auslösekriterium gewonnen, das davon abhängt, ob die von einem Beschleunigungssensor gemessene Fahrzeugbeschleunigung einen vorgegebenen Grenzwert überschreitet. Damit es zu einer tatsächlichen Auslösung ein oder mehrerer Rückhalteeinrichtungen (z.B. Airbag, Gurtstraffer) kommt, müssen also zwei Auslösekriterien gleichzeitig erfüllt sein. Dadurch wird die Betriebssicherheit eines Rückhaltesystems vergrößert, weil die zwei Auslösekriterien zusammen eine zuverlässigere Entscheidung über eine Fahrzeugkollision ermöglichen, die ein Auslösen der Rückhalteeinrichtungen erforderlich macht.

### Vorteile der Erfindung

Gemäß den Merkmalen des Anspruchs 1 wird neben einem ersten Auslösekriterium, das von der Veränderung der Sitzposition mindestens eines Fahrzeuginsassen abhängt, ein zweites Kriterium für das Auslösen eines oder mehrerer Rückhalteeinrichtungen gebildet, das von ein oder mehreren Precrash-Sensoren geliefert wird. Wenn also ein oder mehrere Precrash-Sensoren eine bevorstehende Kollision erkennen und außerdem ein Sitzpositionssensor eine schnelle Veränderung der Sitzposition eines Fahrzeuginsassen (z.B. verursacht durch ein Bremsmanöver) erkennt, können ein oder mehrere Rückhalteeinrichtungen entsprechend früher ausgelöst werden. Das erfindungsgemäße System kommt ohne Beschleunigungssensoren aus. Da Beschleunigungssensoren erst bei schon stattfindender Kollision ein von der Fahrzeugbeschleunigung bzw. -verzögerung abhängiges Signal abgeben, steht für die Auslösung von Rückhalteeinrichtungen nur eine sehr kurze Reaktionszeit zur Verfügung. Die Reaktionszeit für die Auslösung von Rückhalteeinrichtungen ist erheblich länger, wenn man auf Signale von Precrash-Sensoren zurückgreifen kann, die rechtzeitig erkennen, ob es zu einem Crash kommt. Damit man auch sicher gehen kann, daß eine Sitzpositionsveränderung eines Fahrzeuginsassen auch tatsächlich auf einen Bremsvorgang zurückzuführen ist, der einem bevorstehenden Crash mit großer Wahrscheinlichkeit vorausgeht, wird eine Auslösung von Rückhalteeinrichtungen erst dann veranlaßt, wenn zusätzlich zu den beiden Auslösekriterien eine Bremsinformation vorliegt. Die Bremsinformation kann ein Bremslichtschalter liefern.

Gemäß Unteransprüchen können der Sitzpositionsensor und auch der Precrash-Sensor entweder mit optischen Sensoren, oder Ultraschallsensoren oder Mikrowellensensoren realisiert werden. Die Steuereinrichtung, welche die Signale der Precrash- und Sitzpositionssensoren auswertet, ist vorteilhafterweise zusammen mit dem (den) Sitzpositionssensor(en) in einem Gehäuse untergebracht.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Blockschaltbild für ein Rückhaltesystem gemäß der Erfindung und
Figur 2 ein Ablaufdiagramm, nach dem eine Steuereinrichtung die Sensorsignale verarbeitet.

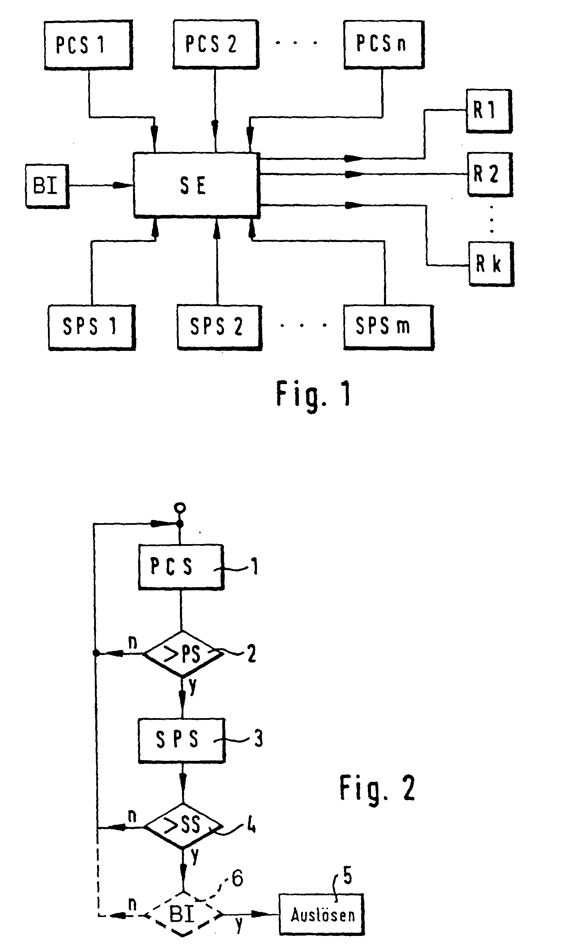

Wie der Figur 1 zu entnehmen ist, weist ein Rückhaltesystem eine Steuereinrichtung SE auf. Dieser Steuereinrichtung SE werden einerseits die Ausgangssignale von ein oder mehreren Precrash-Sensoren PCS1, PCS2,...., PCSn und andererseits die Ausgangssignale von ein oder mehreren Sitzpositionssensoren SPS1, SPS2,...., SPSn zugeführt. Wie noch anhand von Figur 2 erläutert wird, leitet die Steuereinrichtung SE aus den Ausgangssignalen aller dieser Sensoren Kriterien für das Auslösen ein oder mehrerer Rückhalteeinrichtung (z.B. Airbag, Gurtstraffer) R1, R2,...., Rk ab.

Intelligente Rückhaltesysteme arbeiten in der Regel mit Precrash-Sensoren, wie sie z.B. in dem Tagungsband des 3rd International Symposium on Sophisticated Car Occupant Safety Systems "Airbag 2000", Karlsruhe, 26-27.11.1996, S. 16-1 bis 16-19 und 17-1 bis 17-12 beschrieben sind. Es gibt im wesentlichen drei Funktionsprinzipien für Precrash-Sensoren. Entweder bestehen sie aus optischen Sensoren oder Ultraschallsensoren oder Mikrowellensensoren. Diese Sensoren, die entweder an der Frontseite oder an den Längsseiten des Fahrzeugs angeordnet sind, beobachten den Nahbereich um das Fahrzeug herum und erkennen, ob sich der Abstand zwischen dem Fahrzeug und Hindernissen in der Umgebung des Fahrzeugs in der Weise verringert, daß die Gefahr einer Kollision besteht.

Aus dem genannten Tagungsband und auch aus der DE 40 05 598 A1 sind Sitzpositionssensoren bekannt, die in der Lage sind, Positionsveränderungen von Fahrzeuginsassen zu bestimmen. Auch für diese Sitzpositionserkennung können wiederum drei verschiedene Arten von Sensoren eingesetzt werden, nämlich optische Sensoren (z.B. Infrarotsensoren) oder Ultraschallsensoren oder Mikrowellensensoren. Mit diesen Sensoren kann nicht nur eine Lageveränderung eines Fahrzeuginsassen festgestellt werden sondern auch die Geschwindigkeit, mit der sich die Sitzposition verändert. Mit solchen Sitzpositionssensoren können ein oder auch mehrere Sitze in einem Fahrzeug beobachtet und Sitzpositionsveränderungen von ein oder mehreren Fahrzeuginsassen registriert werden. Durch Überwachung der Sitzposition mehrerer Fahrzeuginsassen kann evtl. auf die Bewegung des Fahrzeugs geschlossen werden und daraus abgeleitet werden, welche der vorhandenen Rückhalteinrichtungen zum Schutz der Insassen ausgelöst werden sollten.

Die Figur 2 zeigt ein Ablaufdiagramm, nach dem die Steuereinrichtung SE aus den einzelnen Sensorsignalen Kriterien für das Auslösen von Rückhalteeinrichtungen ableitet. Im ersten Schritt 1 werden zunächst die Ausgangssignale der Precrash-Sensoren PCS1, PCS2,...., PCSn erfasst. Stellvertretend für alle Ausgangssignale der Precrash-Sensoren sei ein Ausgangssignal PCS genannt. Dies kann das Ausgangssignal eines einzelnen Precrash-Sensors oder auch die Kombination der Ausgangssignale mehrerer Precrash-Sensoren sein. In einem Schritt 2 findet eine Schwellenwertentscheidung statt, und zwar wird überprüft ob das Precrash-Sensorsignal PCS größer als eine vorgegebene Schwelle PS ist. Ist dies nicht der Fall, so wird ein neues Precrash-Sensorsignal PCS erfasst. Übersteigt aber das Precrash-Sensorsignal PCS die vorgegebene Schwelle PS - diese Schwelle PS steht für eine große Warscheinlichkeit, daß eine Kollision stattfinden wird - so wird in einem nächsten Verfahrensschritt 3 das Ausgangssignal SPS eines oder mehrerer Sitzpositionssensoren erfasst. Zweckmäßigerweise gibt das Sitzpositionssensorsignal SPS die Geschwindigkeit an, mit der sich die Sitzposition eines Fahrzeuginsassen geändert hat. Bei einer anschließenden Schwellwertentscheidung 4 wird das Sitzpositionssensorsignal SPS mit einer vorgebbaren Schwelle SS verglichen. Diese Schwelle SS ist ein Geschwindigkeitswert für die Veränderung der Sitzposition eines Fahrzeuginsassen, bei der die Warscheinlichkeit groß ist, daß sich der Fahrzeuginsasse verletzen würde, wenn nicht ein oder mehrere Rückhalteeinrichtungen ausgelöst würden. Wird also die Schwelle SS vom Sitzpositionssensorsignal SPS überschritten, so werden in jedem Fall in Schritt 5 ein oder mehrere Rückhalteeinrichtungen ausgelöst. Für das Auslösen von Rückhalteeinrichtungen sind also zwei Kriterien erforderlich. Das erste Kriterium hängt vom Precrash-Sensorsignal PCS und das zweite Kriterium vom Sitzpositionssensorsignal SPS ab.

Beim Verfahrensablauf in Figur 2 wird optional (deshalb strichliert gezeichnet) abgefragt, ob gleichzeitig mit den beiden anderen Auslösekriterien noch eine Bremsinformation BI vorliegt. Die der Steuereinrichtung SE zugeführte Bremsinformation BI kann am einfachsten von einem Bresmlichtschalter geliefert werden. Wenn nämlich zusätzlich eine Bremsinformation bei der Auslöseentscheidung berücksichtigt wird, kannn man sicher gehen, daß eine Sitzpositionsänderung eines Fahrzeuginsassen auf einen Bremsvorgang zurückzuführen ist, der in den meisten Fällen einem bevorstehenden Crash vorausgeht. Damit wird ausgeschlossen, daß eine von dem Insassen selbst vorgenommene Sitzpositionsänderung ein Auslösekriterium bildet.

Es ist sehr raum- und gewichtsparend, wenn der bzw. die Sitzpositionensensoren SPS1, SPS2, ....., SPSm und die Steuereinrichtung SE in einem gemeinsamen Gehäuse untergebracht werden, das beispielsweise im Fahrzeugdach installiert werden kann.

## Patentansprüche

1. Rückhaltesystem, das ein oder mehrere Rückhalteeinrichtungen für Fahrzeuginsassen aufweist und mit mindestens einem Sitzpositionssensor (SPS1, SPS2,...., SPSm) ausgestattet ist, mit dem eine Veränderung der Sitzposition mindestens eines Fahrzeuginsassen feststellbar ist, wobei eine Steuereinrichtung ein erstes Kriterium für das Auslösen eines oder mehrerer Rückhalteeinrichtungen bildet, wenn die Veränderungsgeschwindigkeit der Sitzposition eine vorgebbare Schwelle übersteigt, **dadurch gekennzeichnet, daß** die Steuereinrichtung (SE) ein zweites Kriterium für das Auslösen eines oder mehrerer Rückhalteeinrichtungen (R1, R2,....,Rk) bildet, wenn ein oder mehrere Precrash-Sensoren (PCS1, PCS2....,PCSn) eine bevorstehende Kollision signalisieren, und daß die Steuereinrichtung (SE) die Auslösung einer oder mehrerer Rückhalteeinrichtungen (R1, R2,...., Rk) erst dann veranlaßt, wenn beide Auslösekriterien gleichzeitig vorliegen und zusätzlich zu den beiden Auslösekriterien eine Bremsinformation vorliegt.

2. Rückhaltesystem nach Anspruch 1, **dadurch gekennzeichnet, daß** ein Bremslichtschalter die Bremsinformation liefert.

3. Rückhaltesystem nach Anspruch 1, **dadurch gekennzeichnet, daß** der Sitzpositionssensor (SPS1, SPS2,...., SPSm) ein optischer Sensor ist.

4. Rückhaltesystem nach Anspruch 1, **dadurch gekennzeichnet, daß** der Sitzpositionssensor (SPS1, SPS2,...., SPSm) ein Ultraschallsensor ist.

5. Rückhaltesystem nach Anspruch 1, **dadurch gekennzeichnet, daß** der Sitzpositionssensor (SPS1, SPS2, ...., SPSm) ein Mikrowellensensor ist.

6. Rückhaltesystem nach Anspruch 1, **dadurch gekennzeichnet, daß** der Precrash-Sensor (PCS1, PCS2, ...., PCSn) ein optischer Sensor ist.

7. Rückhaltesystem nach Anspruch 1, **dadurch gekennzeichnet, daß** der Precrash-Sensor (PCS1, PCS2, ...., PCSn) ein Ultraschallsensor ist.

8. Rückhaltesystem nach Anspruch 1, **dadurch gekennzeichnet, daß** der Precrash-Sensor (PCS1, PCS2, ...., PCSn) ein Mikrowellensensor ist.

9. Rückhaltesystem nach Anspruch 1, **dadurch gekennzeichnet, daß** die Steuereinrichtung (SE) und der Sitzpositionssensor (SPS1, SPS2, ...., SPSm) zusammen in einem Gehäuse untergebracht sind.

## Claims

1. Restraint system which has one or more restraining devices for vehicle occupants and is equipped with at least one sitting-position sensor (SPS1, SPS2, ...., SPSm) with which a change in the sitting position of at least one vehicle occupant can be detected, a control device forming a first criterion for the triggering of one or more restraining devices if the speed of change of the sitting position exceeds a predefinable threshold, **characterized in that** the control device (SE) forms a second criterion for the triggering of one or more restraining devices (R1, R2, ...., Rk) if one or more pre-crash sensors (PCS1, PCS2, ...., PCSn) signal an imminent collision, and **in that** the control device (SE) causes one or more restraining devices (R1, R2, ...., Rk) to trigger only if both triggering criteria are fulfilled simultaneously and braking information is present in addition to the two triggering criteria.

2. Restraint system according to Claim 1, **characterized in that** a brake light switch supplies the brake information.

3. Restraint system according to Claim 1, **characterized in that** the sitting-position sensor (SPS1, SPS2, ...., SPSm) is an optical sensor.

4. Restraint system according to Claim 1, **characterized in that** the sitting-position sensor (SPS1, SPS2 ...., SPSm) is an ultrasonic sensor.

5. Restraint system according to Claim 1, **characterized in that** the sitting-position sensor (SPS1, SPS2, ...., SPSm) is a microwave sensor.

6. Restraint system according to Claim 1, **characterized in that** the pre-crash sensor (PCS1, PCS2, ...., PCSn) is an optical sensor.

7. Restraint system according to Claim 1, **characterized in that** the pre-crash sensor (PCS1, PCS2, ...., PCSn) is an ultrasonic sensor.

8. Restraint system according to Claim 1, **characterized in that** the pre-crash sensor (PCS1, PCS2, ...., PCSn) is a microwave sensor.

9. Restraint system according to Claim 1, **characterized in that** the control device (SE) and the sitting-position sensor (SPS1, SPS2, ...., SPSm) are accommodated together in one housing.

## Revendications

1. Système de retenue comportant une ou plusieurs installations de retenue des occupants d'un véhicule et ayant au moins un capteur de position assise (SPS1, SPS2, ..., SPSm), qui détermine une variation de la position assise d'au moins un occupant du véhicule, dans lequel une installation de commande forme un premier critère pour le déclenchement d'une ou plusieurs installations de retenue si la vitesse de variation de la position assise dépasse un seuil prédéterminé,
**caractérisé en ce que**
l'installation de commande (SE) forme un second critère pour le déclenchement d'une ou plusieurs installations de retenue (R1, R2, ..., Rk), si un ou plusieurs capteurs de pré-collision (PCS1, PCS2..., PCSn) signalent une collision préalable, et l'installation de commande (SE) ne déclenche une ou plusieurs installations de retenue (R1, R2, ..., Rk) que si les deux critères de déclenchement sont remplis simultanément et si en plus des deux critères de déclenchement on a une information de freinage.

2. Système de retenue selon la revendication 1,
**caractérisé en ce qu'**
un interrupteur de feu de frein fournit l'information de freinage.

3. Système de retenue selon la revendication 1,
**caractérisé en ce que**
le capteur de position assise (SPS1, SPS2, ..., SPSm) est un capteur optique.

4. Système de retenue selon la revendication 1,
**caractérisé en ce que**
le capteur de position assise (SPS1, SPS2, ..., SPSm) est un capteur à ultrasons.

5. Système de retenue selon la revendication 1,
**caractérisé en ce que**
le capteur de position assise (SPS1, SPS2, ..., SPSm) est un capteur à micro-ondes.

6. Système de retenue selon la revendication 1,
**caractérisé en ce que**
le capteur de pré-collision (PCS1, PCS2, ..., PCSn) est un capteur optique.

7. Système de retenue selon la revendication 1,
**caractérisé en ce que**
le capteur de pré-collision (PCS1, PCS2, ..., PCSn) est un capteur à ultrasons.

8. Système de retenue selon la revendication 1,
**caractérisé en ce que**
le capteur de pré-collision (PCS1, PCS2, ..., PCSn) est un capteur à micro-ondes.

9. Système de retenue selon la revendication 1,
**caractérisé en ce que**
l'installation de commande (SE) et le capteur de position assise (SPS1, SPS2, ..., SPSm) sont logés dans un même boîtier.
